# EUROPEAN PATENT APPLICATION

(11) **EP 3 101 292 A2**
(43) Date of publication of application: **07.12.2016**
(21) Application number: 16178219.8
(22) Date of filing: 16.12.2005
(51) Int. Cl.: F16C 33/00, F16J 15/324

(54) **SEAL STRUCTURE OF A ROTATION MEMBER**

(30) Priority: 16.12.2004 JP 2004364677
(62) Divisional of application: 05816915.2
(71) Applicant: Uchiyama Manufacturing Corp., Okayama-shi Okayama 702-8004 (JP)
(72) Inventor: SHIBAYAMA, Masanori, Okayama, 701-2221 (JP); KASAMOTO, Tadashi, Okayama, 701-2221 (JP)
(74) Representative: Sajda, Wolf E.

(57) **Abstract**

A seal structure of a rotation member having a seal lip (8) which is fixed to one of a rotatable member (3) or a fixed member (4) and is in relatively slidable contact with a slidable contact surface (73) of the other member (3, 4). The slidable contact surface (73) to which the seal lip (8) slidably contacts is applied with a grease (G) which has a basic oil kinematic viscosity of 10 to 30 mm²/sec at 40 °C.

## Description

### Technical Field

The present invention relates to a seal structure of a rotation member having a seal lip which is fixed to one of a rotatable member and a fixed member and is in relatively slidable contact with the other member.

### Background Art

There has been known a seal structure of a rotation member having a seal lip which is fixed to one of a rotatable member and a fixed member and is in relatively slidable contact with the other member. Such a seal structure has a function to prevent invasion of water and dust into a bearing unit and to prevent leakage of grease from a bearing unit when the seal structure is mounted at both sides of a rolling element of a roll bearing unit.

Grease is applied where a seal lip is in a relatively slidable contact so as to make both of them contact smoothly and slidably.

The document JP 2002-062 305 A describes such a structure that a slinger which is mounted on a bearing unit and is fixed to a rotatable member and a seal lip which is fixed to a fixed member and slidably contacts with the slinger are combined. It also discloses that a part to which the tip end of the seal lip slidably contacts is a smooth surface to ensure sealing ability.

EP 1 475 548 A1 discloses a sealing device and a rolling bearing and a hub unit incorporating the sealing unit, wherein the seal member with its base end connected to a metal core has three seal lips, wherein one of the seal lips has a tip end with a larger thickness than the thickness of the base end.

US 2004/0066004 A1 discloses a bearing seal for a water pump of an automobile, which has rolling elements between an outer ring fixed to a casing and a rotary shaft that is provided with a drive portion at one end and an impeller at the other end. In addition, a seal is formed between the outer ring and the rotary shaft by an annular seal body fixed to each end of the outer ring.

JP 2003-021 148 A discloses a ball bearing with a filler, which is grease comprising perfluoropolyether oil of a kinematic viscosity of 20 to 200 mm²/sec at 40 °C as base oil and polytetrafluoroethylene as a thickening agent.

JP-U-03-043 174 discloses that an elastic seal lip is provided for a sealing device which is fitted and mounted between a rotatable member and a fixed member, wherein the slidably contacting surface of the seal lip is formed in a concavo-convex shape.

JP 2002-276 675 A discloses a roller bearing characterized in having an inner ring, an outer ring, multiple rolling element, a retainer retaining the rolling elements and a seal or a shield and formed by sealing grease containing phosphorus compound and fatty acid derivative at the ratio of 0.5-10 wt.% in total.

JP 59-199 232 A discloses a surface treatment of an oil seal, wherein an uneven sealing surface is provided by spraying particles onto the surface.

JP 2003-148 626 A discloses a seal device, wherein the value of the surface roughness of the metal ring of the seal device is set to 1.50 to 3.00 µm.

### Disclosure of the Invention

### Problems to be Solved in the Invention

In these days, many attempts to improve the fuel consumption of automobiles have been done and a reduction of a rotary torque for the bearing parts of axle has been expected.

The above-mentioned grease applied to the slidably contact surface of the slinger and the seal lip has a comparatively high basic oil kinematic viscosity of about 70 to 75 mm²/sec at 40 degrees centigrade (40 °C) considering the sealing ability. Application of such a grease keeps the sealing ability and makes a smooth slidable contact. However, the torque caused by the viscosity resistance of grease cannot be ignored, thereby failing to meet the requirement of improving the fuel consumption.

When the part to which the tip end of the seal lip is in slidable contact is a smooth surface as mentioned in the patent document 1, the sealing ability is secured, however, the friction resistance is enlarged and increases the rotary torque.

When the surface of the tip end of the seal lip is transcribed with a mold with a concave-convex treatment and is surface-finished with a sandblast or a sandpaper to make a rough surface, it is assumed that the friction resistance at the part to which a slinger slidably contacts is reduced, thereby being effective for reducing the torque.

However, when the surface of the tip end is roughened with a mold with a concave-convex treatment, the concave-convex surface of the mold is worn after several moldings and the concave-convex surface of the product (seal lip) is disappeared, thereby losing the effect of a torque reduction. As to the method of making a rough surface with a sandblast or a sandpaper, the quality is varied because the treatment surface is an elastic material such as rubber, thereby causing variation in the quality and productivity problems.

The present invention is proposed in order to solve the above-mentioned problems and the present invention is characterized by a seal structure of a rotation member which keeps the sealing ability of a seal member and makes it possible to reduce the torque.

### Means to Solve the Problem

According to the invention, the object is solved by a seal structure as specified in the main claim. Advantageous further developments of the seal structure are specified in the subclaims and explained in detail in the following specification in connection with the drawings.

### Effect of the Invention

According to one aspect of the seal structure of a rotation member of the present invention, grease with a basic oil kinematic viscosity of 10 to 60 mm²/sec at 40 °C is applied on the surface to which the seal lip is in slidably contact, thereby enabling a reduction of the rotary torque while keeping the sealing ability. Further, the surface to which the seal lip slidably contacts is formed with a plurality of concave-convex surface dimples, so that the grease is kept in the concave-convex parts. The oil film of grease is not destroyed even when the pressure caused by the seal lip is acting on the surface to which the seal lip is in slidable contact, so that the torque can be remarkably reduced while further keeping the sealing ability by the multiple effect of such grease with the above basic oil kinematic viscosity.

Meanwhile, when the basic oil kinematic viscosity at 40 °C becomes lower than 10 mm²/sec, the fluidity of grease is increased, the grease is not kept in the concave-convex parts to be dispersed from the slidably contact surface by the rotary slidable contacting actions, thereby reducing the sealing ability and increasing the friction resistance. Further, when the basic oil kinematic viscosity at 40 °C becomes larger than 60 mm²/sec, the viscosity resistance is enlarged, so that the grease is strongly kept on the concave-convex surface and the reduction effect of torque is reduced.

According to another aspect of the seal structure of rotation member of the present invention, grease with a basic oil kinematic viscosity of 10 to 30 mm²/sec at 40 °C is applied on the surface to which the seal lip slidably contacts, thereby enabling to remarkably reduce the rotary torque while keeping the sealing ability without having a concave-convex surface on the surface to which the seal lip slidably contacts.

Meanwhile, when the basic oil kinematic viscosity at 40 °C becomes lower than 10 mm²/sec, the fluidity of grease is increased, the grease is dispersed from the slidably contact surface by the rotary sliding and contacting actions, thereby reducing the sealing ability and increasing the friction resistance. Further, when the basic oil kinematic viscosity at 40 °C becomes larger than 30 mm²/sec, the remarkable reduction effect of rotary torque is not achieved.

According to another aspect of the seal structure of rotation member of the present invention, the surface to which the seal lip is in slidable contact is formed with a plurality of concave-convex dimples. The grease is kept in the concave-convex parts and the oil film of the grease is not destroyed when the pressure caused by the seal lip is acting on the slidably contact surface, and the torque is reduced while further keeping the sealing ability by the multiple effect with the grease with the above-mentioned basic oil kinematic viscosity.

According to another aspect of the seal structure of rotation member of the present invention, the asperity or roughness Ra of the surface to which the seal lip is in slidable contact is preferably set at 0.5 to 1.5 µm. If it is less than 0.5 µm, the retention capacity of grease near the smooth surface is reduced and a grease loss and friction resistance increase are caused. If it is larger than 1.5 µm, the surface becomes too rough, thus deteriorating the sealing ability.

According to another aspect of the seal structure of rotation member of the present invention, many dimples are formed on the slidably contact surface by way of collision method of minute rigid particles, thereby easily forming the dimples.

According to another aspect of the seal structure of rotation member of the present invention, the rotatable member and the fixed member comprise a bearing unit. If the present invention is applied to the bearing unit of automobiles, the vehicle consumption is improved while keeping such sealing ability that prevents invasion of water and dust into the bearing unit and prevents leakage of grease from the bearing unit.

According to another aspect of the seal structure of rotation member of the present invention, if the seal lip is designed to have a relatively slidable contact with a metal slinger, the rotary torque is remarkably reduced while keeping the sealing ability like the aspects mentioned above.

### Brief Description of Drawings

- Fig. 1: is a vertical sectional view showing one embodiment of a bearing unit using a seal structure of the present invention.
- Fig. 2a and Fig. 2b: are enlarged views of the part X in Fig. 1
- Fig. 3: is an enlarged view of the part Y in Fig. 2.
- Fig. 4a and Fig. 4b: are similar views to Fig. 2 in another embodiment.
- Fig. 5a and Fig. 5b: are similar views to Fig. 2 in another embodiment.
- Fig. 6: shows experimental conditions.
- Fig. 7: is a graph showing the measured value of the experimental result.

### Explanation of Reference Number

- 1: bearing unit
- 6: seal member
- 7: slinger
- 73: slidable contact surface
- 73a: dimple
- 8: seal lip
- 80: core member
- 81: lip body
- 82: lip portion
- G: grease

### Best Mode for Carrying Out the Invention

Now the preferred embodiments of the present invention are explained hereinafter referring to the drawings.

### Embodiment 1

A preferred embodiment of the present invention is explained.

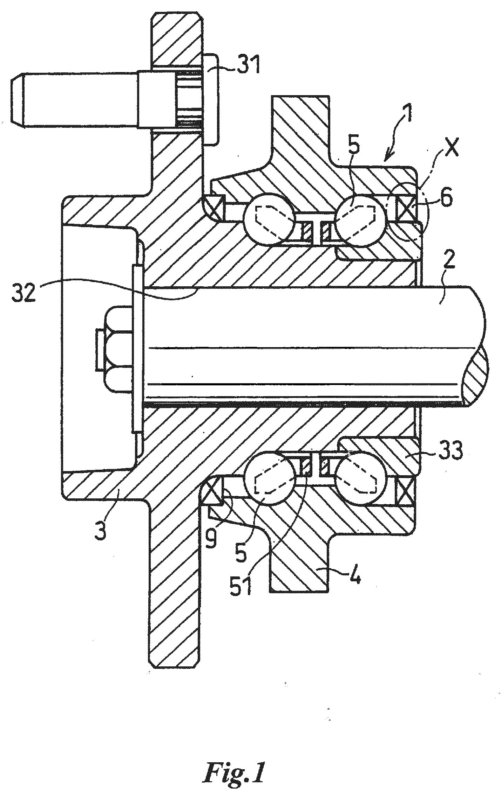

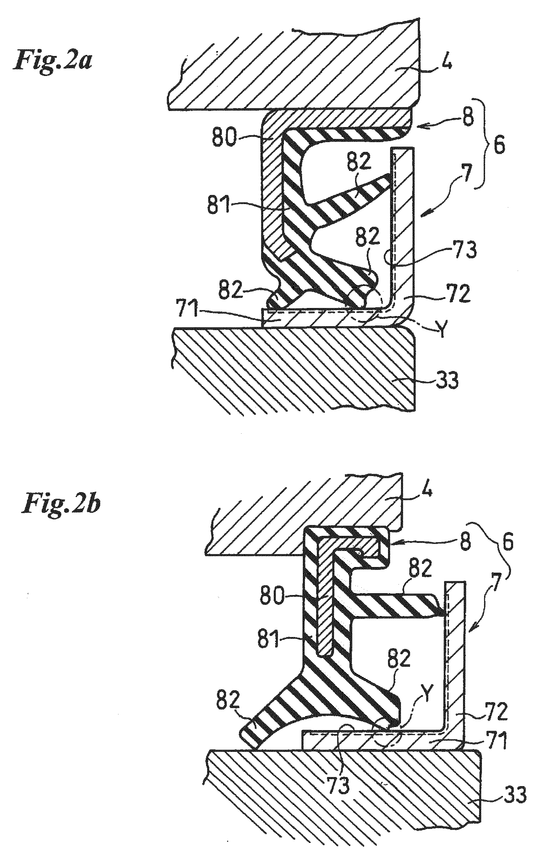

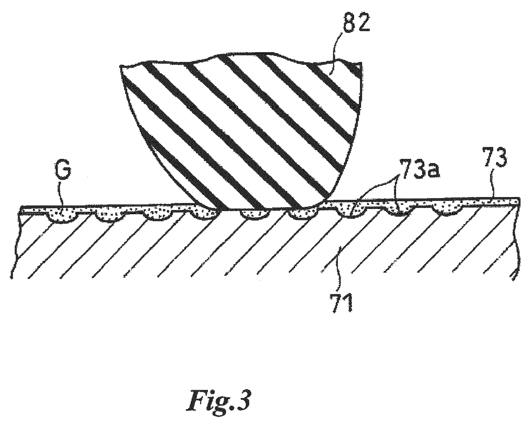

Fig. 1 is a vertical sectional view showing one embodiment of a bearing unit using a seal structure of the present invention, Fig. 2a and Fig. 2b are enlarged views of a part X in Fig. 1, and Fig. 3 is an enlarged view of a part Y in Fig. 2.

Fig. 1 shows an embodiment in which the wheel of an automobile is supported on a driving shaft 2 by means of a roller bearing unit 1. A tire wheel (not shown) is fixed to a hub 3 constituting an inner wheel with a bolt 31. The reference numeral 32 shows a spline hole formed in the hub 3 to which the driving shaft 2 is spline fitted to be integrally fixed to the hub 3 and to transmit the rotary driving force of the driving shaft 2 to the tire wheel. The reference numeral 33 indicates an inner wheel member and constitutes an inner wheel together with the hub 3.

The reference numeral 4 is an outer wheel which is fixed to a suspension of vehicle body (not shown). Two rows of rolling elements (balls) 5 are interposed between the outer wheel 4 and the inner wheel (the hub 3 and the inner wheel member 33) so as to be retained with a retainer 51. The reference numerals 6, 9 are seal members mounted in a rolling portion of the rolling elements 5 in order to prevent leakage of grease (lubricant agent like grease and so on) and to prevent invasion of dirt and water from outside and they are pressed between the outer wheel 4 and the inner wheel (the hub 3 and the inner wheel member 33).

Fig. 2a and Fig. 2b are enlarged views of the part X in Fig. 1. A ring-like slinger 7 which is formed by sheet metal processing stainless steel is pressed in the circumference body of the inner wheel side (hub 3 and inner wheel member 33). The slinger 7 comprises a tubular portion 71 which is fitted to be attached to the circumference body of the inner wheel (hub 3 and inner wheel member 33) and an outward flange portion 72 formed by bending one end of the tubular portion 71.

A seal lip 8 is pressed in the corresponding position in the slinger 7. The seal lip 8 comprises a core member 80 made of stainless steel or low-carbon steel and a lip body 81 made of elastic material like rubber which is integrally formed with the core member 80. The lip body 81 includes a plurality of lip portions 82 extending like a tongue and the tip ends of the lip portions 82 elastically contact with the surface of the slinger 7 accompanied with an elastic deformation when the slinger 7 and the seal lip 8 are fitted in each other to form the seal member 6. The thus constructed seal lip 8 is pressed in the circumference body (inner circumference) of the outer wheel 4.

The seal member 6 thus comprises the slinger 7 and the seal lip 8. The surface of the lip portions 82 which elastically contacts with the slinger 7 become seal surfaces sliding on each other accompanied with the rotation of the inner wheel (hub 3 and the inner wheel member 33), thereby preventing invasion of dirt or water into the bearing unit 1 from outside and preventing leakage of grease filled in the bearing unit 1. In the figure, three lip portions 82 are provided, however the shape of the lip portion 82 is not limited to it.

In addition, the structure of the lip portion 82 is not limited to the embodiment shown in the figure. Three lip portions 82 may elastically contact with the slinger 7 as shown in Fig. 2a and one lip portion 82 may elastically contact with the circumference body of the inner wheel member 33 and the elastically contacted surfaces may slidably contact each other to function also as a seal surface as shown in Fig. 2b.

The grease (G) to be applied may be an ester-based grease, a synthetic hydrocarbon-based grease, a mineral oil or a mixture of an ester-based grease and mineral oil, however, it is not limited to them.

The above value of basic oil kinematic viscosity is based on an experiment which is described hereinafter. If it is within the range from 10 to 60 mm²/sec at 40 °C, the torque can be reduced while keeping the sealing ability. Further, if the grease G has the basic oil kinematic viscosity within the range from 10 to 30 mm²/sec at 40 °C, a remarkable torque reduction effect can be achieved without forming the dimples 73a mentioned hereinafter on the slidable contact surface 73 of the slinger 7 to the seal lip 8.

Fig. 3 diagrammatically shows how the dimples 73a are formed.

The production method of such a plurality of dimples 73a is not limited. It may be formed by shot peening such that minute rigid particles are collided or it may be formed such that the minute rigid particles formed as a steel ball having a diameter from 40 to 200 µm are sprayed to be collided at the spray speed of 100 m/sec or more.

Providing such a plurality of dimples 73a, the grease G is kept in the space formed with the dimple 73a to keep the oil film even when a pressure is applied in case of a relative slidable contact at high speed with the tip end of the lip portion 82, thereby reducing the sliding resistance and resistance coefficient. Therefore, a restraining effect of heat generation can be expected as well as the torque can be reduced.

If the asperity or roughness Ra (JIS B0601-2001) of the slidable contact surface 73 of the slinger 7 in this case is 0.5 to 1.5 µm, the sealing ability is kept and the torque is reduced, thereby being most preferable.

In the above embodiment, the minute rigid particles for forming the dimples 73 a are steel balls, however, small balls made of other metal, glass, ceramic and so on may be used depending on the material of the surface to be processed. The material of the surface to be processed includes metal sheet of stainless steel, rolled plate (SPCC) and so on.

The seal member 9 is not specifically described above, however, if it is constructed similar to the seal member 6, the torque reduction effect and the fuel consumption improvement effect become more remarkable.

It goes without saying that the present invention can be applied not only to the bearing unit 1 shown in the figure but also to a bearing structure in which the inner wheel is fixed and the outer wheel is rotatable.

### Embodiment 2

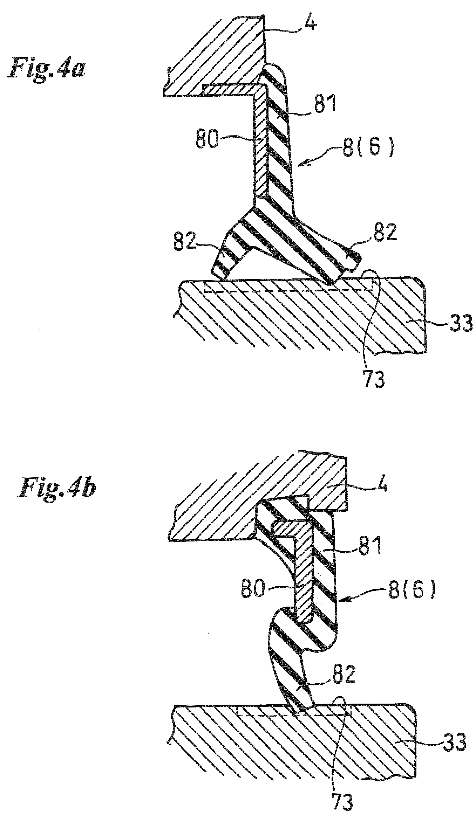

Fig. 4a and Fig. 4b show another embodiment of the present invention and are similar to Fig. 2.

In the Embodiment 1 mentioned above, the seal member 6 is constructed such that the metal singer 7 is fixed to the rotatable side and the seal lip 8 which is in relatively slidable contacted with the slinger 7 is fixed to the rotatable side. However, this embodiment provides a seal structure such that the slinger 7 is not provided and the seal lip 8 itself consists a seal member 6. The common members to the Embodiment 1 have the same reference numerals and their explanations are omitted here.

The seal lip 8 is pressed in the inner circumference of the outer wheel 4 being a fixed member so as to be fixed. The seal lip 8 comprises a core member 80 made of stainless steel, low-carbon steel, or the like and a lip body 81 made of elastic material like rubber which is integrally formed with the core member 80. The lip body 81 is provided with a plurality of lip portions 82 extending like a tongue. The tip ends of the lip portions 82 are elastically contacted with the slidable contact surface 73 of the inner wheel member 33 accompanied with elastic deformation.

This embodiment relates to a seal structure with the seal lip 8 for a rotation member. It is characterized in that the slidable contact surface 73 of the inner wheel member 33 to which the seal lip 8 slidably contacts is applied with grease having a basic oil kinematic viscosity of 10 to 60 mm²/sec at 40 °C. This embodiment is common to the Embodiment 1 in that the slidable contact surface 73 is a concavo-convex surface with a plurality of dimples and the surface asperity Ra is from 0.5 to 1.5 µm. It goes without saying that the plurality of dimples may be formed by colliding minute rigid particles. Further, the present invention can be applied not only to the bearing unit 1 shown in the figure but also to a bearing structure in which the inner wheel is fixed and the outer wheel is rotatable.

### Embodiment 3

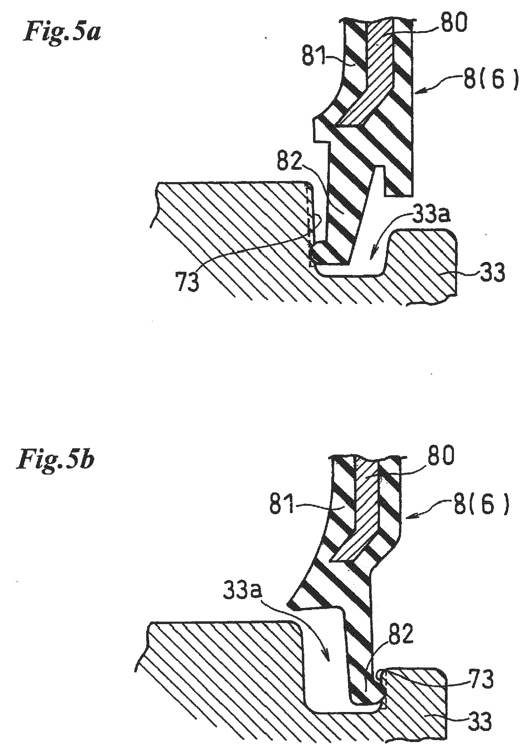

Fig. 5a and Fig. 5b show still another embodiment of the present invention and are similar to Fig. 2.

The Embodiment 2 mentioned above shows the seal structure in which the slinger is not provided and the seal lip 8 itself consists of a seal member 6. In this Embodiment 3, the seal lip 8 is similarly constructed and the surface to which the seal lip 8 slidably contacts is different. The common members to the Embodiments 1 and 2 have the same reference numerals and their explanations are omitted here.

In this embodiment, the seal lip 8 is pressed in the inner circumference of the outer wheel 4 being a fixed member so as to be fixed, like the Embodiment 2. The seal lip 8 comprises a core member 80 made of stainless steel, low-carbon steel, or the like and a lip body 81 made of elastic material like rubber and so on which is integrally formed with the core member 80 so as to cover the core member 80. The lip body 81 is provided with a plurality of lip portions 82 extending like a tongue. The tip end of the lip portions 82 elastically contacts with the side wall (the slidable contact surface 73) of a circumferential groove formed on the inner wheel member 33 accompanied with elastic deformation.

This embodiment relates to a seal structure of a rotation member provided with the seal lip 8 which slidably contacts with the side wall of the circumferential groove 33a. It is characterized in that the slidable contact surface 73 to which the seal lip 8 slidably contacts is applied with grease having a basic oil kinematic viscosity of 10 to 60 mm²/sec at 40 °C. This embodiment is common to the Embodiment 1 in that the slidable contact surface 73 is a concavo-convex surface with a plurality of dimples and the asperity Ra is from 0.5 to 1.5 µm. It goes without saying that the plurality of dimples may be formed by colliding with minute rigid particles. Further, the present invention can be applied not only to the bearing unit 1 shown in the figure but also to a bearing structure in which the inner wheel is fixed and the outer wheel is rotatable.

### Experimental Example

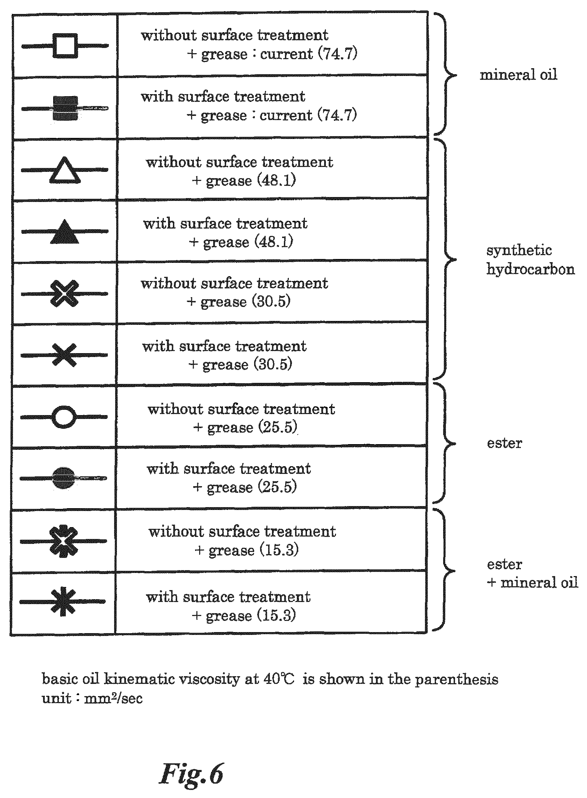

5 pieces of seal member with a surface process comprising a slinger and a seal lip were prepared, the slinger being made of SUS430 and being dimple processed such that steel balls having a diameter from 40 to 200 µm were sprayed to be collided with the slidably contact surface to the seal lip at the spray speed of 100 m/sec or above so as to have an asperity Ra of 0.85 µm, and the seal lip being molded with NBR. Further 5 pieces of a seal member without surface process comprising a slinger without dimple process and a seal lip were prepared. Grease having a basic oil kinematic viscosity of 15.3 to 74.7 mm²/sec was applied on each seal member. 10 kinds of samples were prepared as shown in Fig. 6, they were mounted to the bearing unit of an automobile, and experiments were executed for measuring the rotary torque applied on the axle at the rotation number of 200 to 1500 rpm of the axle.

### Result

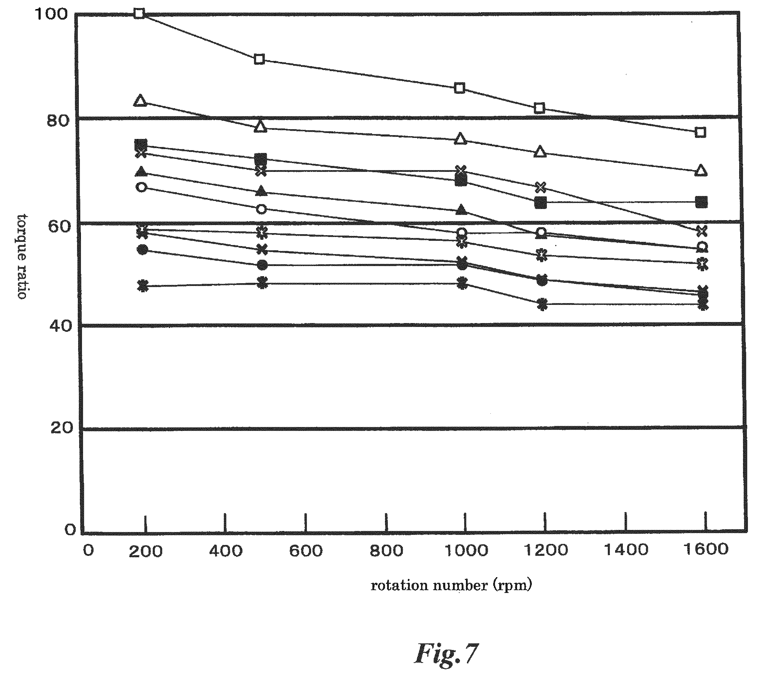

Fig. 6 and Fig. 7 show the result of the experiment, Fig. 6 shows how the 10 kinds of slinger are processed and how the grease is applied corresponding to the graph in Fig. 7, and Fig. 7 is a graph showing the measured value. The kind of grease to be applied is specified in addition in the table in Fig. 6, the vertical axis in Fig. 7 shows the torque ratio where 200 rpm of the rotation number of the axle is set as 100 when the seal member comprising a slinger without surface treatment and applied with grease having a basic oil kinematic viscosity of 74.7 mm²/sec at 40 °C on the slidably contact surface thereof is mounted on the bearing unit. The horizontal axis shows the rotation number of the axle (rpm).

It has been found that, as mentioned above, if the slinger is not surface treated, when grease with a basic oil kinematic viscosity of 15.3 mm²/sec is applied thereon, the torque can be reduced at about 35 % of the current product (without surface treatment, basic oil kinematic viscosity of grease : 74.7 mm²/sec). Further, when the basic oil kinematic viscosity is 25.5 mm²/sec, the torque can be reduced at about 30 %. When the basic oil kinematic viscosity is 30.5 mm²/sec, the torque can be reduced at about 20 %. However, in this case, it can be the that the torque is remarkably reduced when the slinger is surface treated.

Therefore, it is effective to have a basic oil kinematic viscosity of 10 to 30 mm²/sec when the slinger is not surface treated.

On the other hand, it has been found that, providing a surface treatment, when the basic oil kinematic viscosity is 48.1 mm²/sec, the torque can be reduced at about 25 % of the current product; when the basic oil kinematic viscosity is 30.5 mm²/sec, the torque can be reduced at about 40 %; when the basic oil kinematic viscosity is 25.5 mm²/sec, the torque can be reduced at about 40 %; and further when the basic oil kinematic viscosity is 15.3 mm²/sec, the torque can be reduced at about 45 %. Using the existing grease (basic oil kinematic viscosity : 74.7 mm²/sec), if the slinger is provided with a surface treatment, the torque can be reduced at about 20 %, however, it is not remarkably effective when comparing with other experimental data.

Therefore, if the slinger is surface treated, it is effective to have a basic oil kinematic viscosity of 10 to 60 mm²/sec.

### Conclusion

From the above experimental data, it has been found that the torque can be reduced by applying a grease having a lower basic oil kinematic viscosity than a current grease (basic oil kinematic viscosity : 74.7 mm²/sec). Further when the slidably contact surface is provided with a surface treatment, in addition to the effect of grease, the torque can be more remarkably reduced.

Further, it has been found that the torque can be effectively reduced at the basic oil kinematic viscosity of 10 to 30 mm²/sec if the slinger is not surface treated, and at the basic oil kinematic viscosity of 10 to 60 mm²/sec if the slinger is surface treated.

The above mentioned basic oil kinematic viscosity shows that of grease at 40 °C.

### Industrial Applicability

The present invention is applied to a seal structure of rotation member having a seal lip which is fixed to one of a rotatable member and a fixed member and has a slidable contact with the other member.

## Claims

1. A seal structure of a rotation member having a seal lip (8) which is fixed to one of a rotatable member (3) or a fixed member (4) and is in relatively slidable contact with a slidable contact surface (73) of the other member (3, 4),
wherein the slidable contact surface (73) to which the seal lip (8) slidably contacts is applied with grease (G) which has a basic oil kinematic viscosity of 10 to 30 mm²/sec at 40 °C.

2. The seal structure according to claim 1,
wherein the seal lip (8) comprises a core member (80) and a lip body (81) made of elastic material integrally formed with the core member (80),
wherein the lip body (81) is provided with a lip portion (82) extending like a tongue, and
wherein the slidable contact surface (73) to which the lip portion (82) slidably contacts is applied with the grease (G).

3. The seal structure according to claim 1 or 2,
wherein the rotatable member (3) comprises a hub (3) and an inner wheel member and
wherein the rotatable member (3) and the fixed member (4) constitute a bearing unit (1).

4. The seal structure according to any one of claims 1 to 3,
wherein the other member is the rotatable member (3) on which no dimples are formed, and
wherein the seal lip (8) is in slidable contact with the rotatable member (3).

5. A seal structure according to any one of claims 1 to 3,
wherein the other member is the rotatable member (3) having a metal slinger (7) on which no dimples are formed, and
wherein the seal lip (8) is in slidable contact with the metal slinger (7).

6. The seal structure according to any one of claims 1 to 5,
wherein the grease (G) has a basic oil kinematic viscosity of 15.3 to 25.5 mm²/sec at 40 °C.

7. The seal structure according to any one of claims 1 to 6,
wherein the grease (G) is a synthetic hydrocarbon-based grease.

8. The seal structure according to any one of claims 1 to 6,
wherein the grease (G) is an ester-based grease.

9. the seal structure according to any one of claims 1 to 6,
wherein the grease (G) is a mixture of an ester-based grease and mineral oil.
